# EUROPÄISCHE PATENTSCHRIFT

(11) **EP 4 118 376 B1**
(45) Veröffentlichungstag und Bekanntmachung des Hinweises auf die Patenterteilung: **19.11.2025**
(21) Anmeldenummer: 21707185.1
(22) Anmeldetag: 17.02.2021
(51) Int. Cl.: F17C 1/00

(54) **TANKBEHÄLTER ZUR SPEICHERUNG VON GASEN UND VERFAHREN ZU DESSEN HERSTELLUNG**
TANK CONTAINER FOR STORING GASES AND METHOD FOR MANUFACTURING SAID TANK CONTAINER
RÉCIPIENT DE RÉSERVOIR POUR LE STOCKAGE DE GAZ ET PROCÉDÉ DE FABRICATION DUDIT RÉCIPIENT DE RÉSERVOIR

(30) Priorität: 11.03.2020 DE 102020203128
(43) Veröffentlichungstag der Anmeldung: 18.01.2023
(73) Patentinhaber: Robert Bosch GmbH, 70442 Stuttgart (DE)
(72) Erfinder: SEITZ, Benjamin, 75365 Calw Ernstmuehl (DE); LOEBER, Lukas, 71638 Ludwigsburg (DE); BUCHER, Sebastian, 74343 Sachsenheim (DE); MUEHLEDER, Friedrich, 75417 Muehlacker (DE)
(86) Internationale Anmeldenummer: PCT/EP2021/053836
(87) Internationale Veröffentlichungsnummer: WO 2021/180436

(56) Entgegenhaltungen:
- WO-A1-2020/038930
- DE-B3- 102018 120 291
- US-A1- 2018 229 863

## Beschreibung

### Technisches Gebiet

Die Erfindung betrifft einen Tankbehälter zur Speicherung von Gasen, insbesondere zur Speicherung von Wasserstoff in einem Kraftfahrzeug. Ferner betrifft die Erfindung ein Verfahren zur Herstellung eines erfindungsgemäßen Tankbehälters.

### Stand der Technik

Aus der DE 10 2014 107 316 A1 ist ein Tankbehälter zur Speicherung von Gasen mit den Merkmalen des Oberbegriffs des Anspruchs 1 bekannt. Der aus der genannten Schrift bekannte Tankbehälter findet Anwendung in Tragflügel- oder Rumpfkonstruktionen von Flugzeugen und zeichnet sich dadurch aus, dass an einem Grundkörper im generativen Herstellverfahren ausgebildete Verstärkungselemente ausgebildet sein können, wobei es in der genannten Schrift erwähnt ist, dass ebenso der Grundkörper im generativen Herstellverfahren erzeugt wird. Bei der Verwendung in Flugzeugen ist es dabei üblich bzw. erforderlich, dass Gewicht des Tankbehälters möglichst gering zu halten, sodass der aus der genannten Schrift bekannte Tankbehälter typischerweise aus Aluminium ausgebildet sein dürfte, wobei in der genannten Schrift keine Angaben zur Materialauswahl offenbart sind.

Die US 2018/229863 A1 offenbart einen Tankbehälter zur Speicherung von Gasen.

Die WO 2020/038930 A1 beschreibt ein Verfahren zur Herstellung eines Leichtbau-Drucktanks und einen nach einem derartigen Verfahren hergestellten Leichtbau-Drucktank.

### Offenbarung der Erfindung

Der erfindungsgemäße Tankbehälter zur Speicherung von Gasen mit den Merkmalen des Anspruchs 1 hat den Vorteil, dass er eine besonders einfache und wirtschaftlich vorteilhafte Herstellung des Tankbehälters ermöglicht. Dies beinhaltet auch eine relativ kurze Fertigungszeit des Behälters. Der Erfindung
liegt die Idee zugrunde, den Grundkörper und die Verstärkungselemente für den Grundkörper einerseits aus möglichst preiswerten und nichtdestotrotz relativ festen Materialien zu fertigen, und andererseits den Grundkörper derart auszubilden, dass dieser möglichst einfach, mit kurzer Produktionszeit und kostengünstig erstellbar ist. Vor dem Hintergrund der obigen Erläuterungen schlägt es daher die Lehre der Erfindung vor, den erfindungsgemäßen Tankbehälter derart auszubilden, dass sowohl der Grundkörper als auch die Verstärkungselemente aus Metall, insbesondere zumindest im Wesentlichen aus Stahl, ausgebildet sind, und dass der Grundkörper als im Umformverfahren hergestelltes Bauteil oder als Schweißkonstruktion ausgebildet ist, auf dessen Wand die Verstärkungselemente unmittelbar aufgebracht sind. Ein derart ausgebildeter Tankbehälter ermöglicht es, den Grundkörper zum Beispiel in Form einer Schweißkonstruktion relativ einfach auszubilden und anschließend die Verstärkungselemente auf die Wand des Grundkörpers (unmittelbar) aufzubringen, um die Festigkeit des Grundkörpers zu erhöhen.

Vorteilhafte Weiterbildungen des erfindungsgemäßen Tankbehälters sind in den Unteransprüchen aufgeführt.

Hinsichtlich der Anordnung der Verstärkungselemente gibt es unterschiedliche Möglichkeiten. Typischerweise sind die Verstärkungselemente im Bereich einer Außenwand des Grundkörpers angeordnet. Dies ist deshalb vorteilhaft, weil dadurch das Volumen des Grundkörpers zur Aufnahme von Gas nicht verringert wird, und andererseits durch die außen angeordneten Verstärkungselemente der unter (relativ hohem) Druck stehende Grundkörper durch die Verstärkungselemente gut versteift bzw. verstärkt werden kann.

Die Anordnung bzw. Ausbildung der Verstärkungselemente an der Außenwand des Grundkörpers bietet darüber hinaus die Möglichkeit, diese aus einem Metall auszubilden, das nicht wasserstoffresistent sein muss, da die Verstärkungselemente nicht in unmittelbarer Wirkverbindung bzw. in direktem Kontakt mit dem Wasserstoff geraten, im Gegensatz zu einer Anordnung der Verstärkungselemente an der Innenwand des Grundkörpers.

Alternativ oder zusätzlich ist es jedoch auch denkbar, dass die Verstärkungselemente im Bereich einer Innenwand des Grundkörpers angeordnet sind. Dies ist beispielsweise dann von Vorteil, wenn der Innenbereich bzw. der Innenraum des Grundkörpers in unterschiedliche Sektionen bzw. Abschnitte unterteilt werden soll, sodass die Verstärkungselemente dann gleichzeitig eine entsprechende Zwischenwand oder Ähnliches ausbilden. In diesem Fall müssen sowohl der Grundkörper als auch die Verstärkungselemente aus einem wasserstoffresistenten Metall bestehen.

Mit Blick auf eine möglichst einfache und gewichtsoptimierte Ausbildung der Verstärkungselemente sind diese vorzugsweise rippenförmig ausgebildet.

In Weiterbildung einer rippenförmigen Ausbildung der Verstärkungselemente ist es sowohl zur Gewichtsoptimierung als auch zur Festigkeitsoptimierung möglich, dass die Breite und/oder Höhe der Verstärkungselemente unterschiedlich ist oder im Bereich eines Verstärkungselements variiert.

Als besonders vorteilhaft hat sich dabei eine Anordnung der Verstärkungselemente herausgestellt, bei der diese netz- oder spiralförmig an dem Grundkörper angeordnet sind. Dabei kann die netz- oder spiralförmige Anordnung bei einem zylindrischen Grundkörper beispielsweise in einem schrägen Winkel zu einer Längsachse des Grundkörpers erfolgen.

Weiterhin umfasst die Erfindung ein Verfahren zur Herstellung eines soweit beschriebenen erfindungsgemäßen Tankbehälters, wobei der Grundkörper und die Verstärkungselemente durch unterschiedliche Herstellverfahren hergestellt werden, und wobei die Verstärkungselemente an einer Wand des Grundkörpers nach vollständiger Herstellung des Grundkörpers unmittelbar in einem generativen Herstellprozess erzeugt werden.

Hinsichtlich des verwendeten generativen Herstellprozesses für die Ausbildung der Verstärkungselemente gibt es ebenfalls mehrere Möglichkeiten, wobei es in einer ersten bevorzugten Ausgestaltung vorgesehen ist, dass die Verstärkungselemente in DMD (Direct Metall Deposition) - Verfahren, und in einer anderen bevorzugten Ausgestaltung im EBAM (Electron Beam Additive Manufacturing) - Verfahren erzeugt werden. Findet eines der beiden genannten Verfahren keine Anwendung, so liegt es selbstverständlich auch im Rahmen der Erfindung, ein anderes bekanntes Verfahren zur generativen Herstellung der Verstärkungselemente anzuwenden.

Für den Fall, dass die Verstärkungselemente an einer Innenwand bzw. im Innenraum des Grundkörpers angeordnet bzw. ausgebildet werden müssen, hat es sich als vorteilhaft herausgestellt, wenn diese mittels einer lanzenförmigen Einrichtung an der Innenwand erzeugt werden, wobei die lanzenartige Einrichtung in eine Öffnung des Grundkörpers hineinragt.

Weitere Vorteile, Merkmale und Einzelheiten der Erfindung ergeben sich aus nachfolgender Beschreibung bevorzugt Ausführungsformen der Erfindung sowie anhand der Zeichnungen.

### Kurze Beschreibung der Zeichnungen

- Fig. 1: zeigt in einem vereinfachten Längsschnitt einen Tankbehälter zur Speicherung von Gas, insbesondere zur Speicherung von Wasserstoff in einem Kraftfahrzeug, während der Fertigung,
- Fig. 2: eine Außenansicht auf den Tankbehälter gemäß Fig. 1,
- Fig. 3: eine teilweise geschnittene Seitenansicht auf ein rippenartiges Verstärkungselement, das an einer Wand des Tankbehälters gemäß Fig. 1 oder 2 aufgebracht ist und
- Fig. 4: eine Ansicht in Richtung des Pfeils IV der Fig. 3.

### Ausführungsformen der Erfindung

Gleiche Elemente bzw. Elemente mit gleicher Funktion sind in den Figuren mit den gleichen Bezugsziffern versehen.

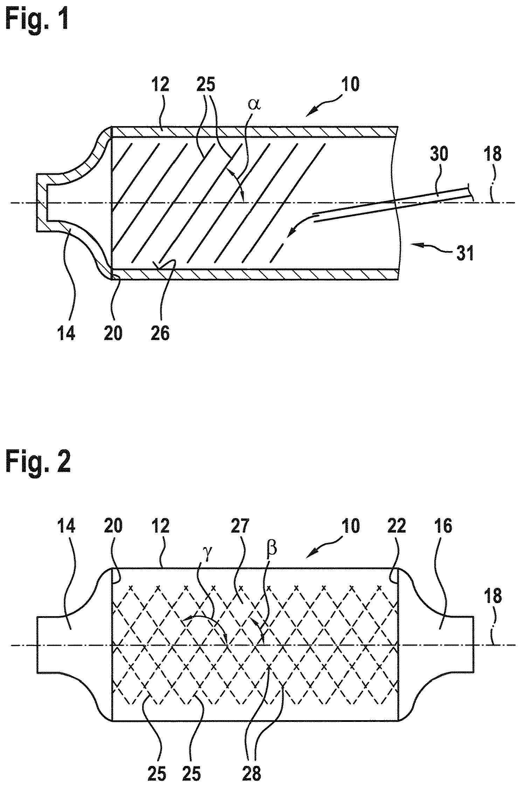

In der Fig. 1 und 2 ist ein Tankbehälter 10 zur Speicherung von Gas, insbesondere zur Speicherung von Wasserstoff, in einem Kraftfahrzeug (nicht dargestellt) gezeigt. Der Tankbehälter 10 weist einen röhrenförmigen, beispielhaft zylindrisch ausgebildeten Grundkörper 12 auf, der stirnseitig mit jeweils einem Verschlussdeckel 14, 16 verschlossen ist. Der Grundkörper 12 kann entweder durch einen Umformvorgang, z.B. durch Fließpressen oder Ähnlichem hergestellt sein, oder aber beispielhaft aus einem zu einem Kreisquerschnitt umgeformten bzw. umgebogenen, plattenförmigen Zuschnitt mit einer nicht dargestellten Längsschweißnaht. Auch kann der Grundkörper 12 beispielsweise aus zwei halbschalenförmigen Elementen bestehen, die an ihren Längskanten miteinander verschweißt sind.

Auch die Ausbildung der Verschlussdeckel 14, 16 kann auf unterschiedliche Art und Weise erfolgen, wobei die Verbindung zwischen den Verschlussdeckeln 14, 16 und dem Grundkörper 12 vorzugsweise durch jeweils eine radial um eine Längsachse 18 des Grundkörpers 12 umlaufende Schweißnaht 20, 22 erfolgt. Insbesondere besteht der Grundkörper 12 sowie die beiden Verschlussdeckel 14, 16 aus einem Stahlwerkstoff, gegebenenfalls mit Legierungszusätzen.

Ergänzend wird erwähnt, dass die Form des Grundkörpers 12 nicht auf kreisförmige Querschnitte beschränkt sein soll, sondern auch beispielhaft oval ausgebildet sein kann. Hierbei ist der Querschnitt des Grundkörpers 12 bzw. die Form des Tankbehälters 10 typischerweise an die Einbauverhältnisse des Tankbehälters 10 in dem Fahrzeug angepasst, um eine maximale Raumausnutzung bzw. ein maximales Tankvolumen zu ermöglichen.

Um insbesondere in Folge des unter relativ hohem Druck in dem Tankbehälter 10 gespeicherten Gases eine Versteifung des Tankbehälters 10 bzw. eine Minimierung der Wanddicke des Grundkörpers 12 und ggf. der Verschlussdeckel 14, 16 zu bewirken, ist der Tankbehälter 10, insbesondere sein Grundkörper 12, zumindest bereichsweise mit Verstärkungselementen 25 ausgestattet.

Die Verstärkungselemente 25 können dabei sowohl im Bereich der Innenwand 26 des Grundkörpers 12 als auch im Bereich der Außenwand 27 des Grundkörpers 12 vorgesehen sein. Beispielhaft ist in der Fig. 1 erkennbar, dass die an der Innenwand 26 angeordneten Verstärkungselemente 25 in Bezug zur Längsachse 18 in einem Winkel α angeordnet sind und spiralförmig bzw. ringförmig ausgebildet sind.

Demgegenüber sind die an der Außenwand 27 des Grundkörpers 12 vorgesehenen Verstärkungselemente 25 ebenfalls rein beispielhaft netzförmig ausgebildet, das heißt, dass die einzelnen Verstärkungselemente 25 gemeinsame Knotenpunkte 28 aufweisen. Die Verstärkungselemente 25 verlaufen in einem Winkel β zur Längsachse 18 des Grundkörpers 12.

Wesentlich ist, dass die Verstärkungselemente 25 in einem generativen Herstellverfahren unmittelbar an der Innenwand 26 bzw. der Außenwand 27 des Grundkörpers 12 erzeugt werden. Hierzu findet vorzugsweise entweder ein Materialauftrag durch ein DMD (Direct Metall Deposition) - Verfahren, oder EBAM (Electron Beam Additive Manufacturing) - Verfahren statt.

Bei dem in der Fig. 1 dargestellten Ausführungsbeispiel werden die Verstärkungselemente 25 bei bereits mit dem Grundkörper 12 verschweißten bzw. verbundenen Verschlussdeckel 14 an der Innenwand 26 erzeugt, während der andere Verschlussdeckel 16 noch nicht mit dem Grundkörper 12 verbunden ist. Selbstverständlich ist es auch denkbar, zur besseren Zugänglichkeit in den Innenraum des Grundkörpers 12 die Verstärkungselemente 25 in einen Zustand an der Innenwand 26 zu erzeugen, bei dem beide Verschlussdeckel 14 und 16 noch nicht mit dem Grundkörper 12 verbunden sind. Vorzugsweise wird zum Ausbilden der Verstärkungselemente 25, insbesondere im Bereich der Innenwand 26, eine lanzenartige Einrichtung 30 verwendet, über die die Zugänglichkeit in den Querschnittsbereich des Grundkörpers 12 im Bereich einer stirnseitigen Öffnung 31 des Grundkörpers 12 ermöglicht wird.

Das Grundmaterial der Verstärkungselemente 25 besteht ebenfalls aus Stahl, vorzugsweise aus demselben Grundwerkstoff wie der Grundkörper 12.

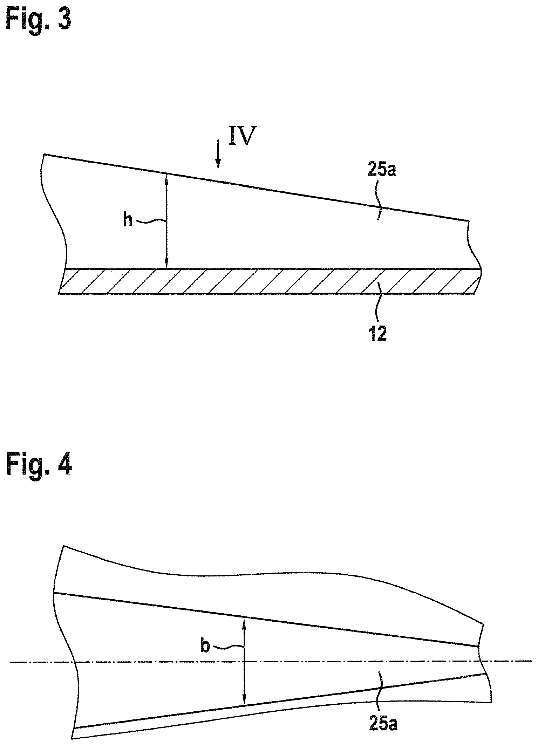

In den Fig. 3 und 4 ist anhand eines Verstärkungselements 25a dargestellt, dass die Höhe h in einer Längserstreckung des Verstärkungselements 25a variabel sein kann, beispielsweise linear zunimmt oder abnimmt. Ebenso ist entsprechend der Fig. 4 erkennbar, dass auch die Breite b des Verstärkungselements 25a in Längserstreckung variabel sein kann, beispielsweise linear abnehmend oder zunehmend. Die unterschiedliche Geometrie der Verstärkungselemente 25a an dem Grundkörper 12 ermöglicht es, im Sinne einer gleichmäßigen Festigkeit bzw. einer benötigten, örtlich unterschiedlichen Festigkeit an dem Grundkörper 12 Material und somit Gewicht für die Verstärkungselemente 25, 25a einzusparen bzw. eine schnellere Fertigung zu ermöglichen. Weiterhin kann auch durch eine entsprechende Steuerung des Fertigungsprozesses oder unterschiedliche Materialzusammensetzung der Verstärkungselemente 25, 25a eine örtlich angepasste Festigkeit erzielt werden.

## Patentansprüche

1. Tankbehälter (10) zur Speicherung von Gasen, insbesondere zur Speicherung von Wasserstoff in einem Kraftfahrzeug, mit einem, vorzugsweise röhrenförmigen, Grundkörper (12) und mit an einer Wand (26, 27) des Grundkörpers (12) angeordneten, durch einen generativen Herstellprozess erzeugte Verstärkungselementen (25; 25a),
**dadurch gekennzeichnet,**
**dass** sowohl der Grundkörper (12) als auch die Verstärkungselemente (25; 25a) aus Metall, insbesondere zumindest im Wesentlichen aus Stahl, ausgebildet sind, und dass der Grundkörper (12) als im Umformverfahren hergestelltes Bauteil oder als Schweißkonstruktion ausgebildet ist, auf dessen Wand (26, 27) die Verstärkungselemente (25; 25a) unmittelbar aufgebracht sind.

2. Tankbehälter nach Anspruch 1,
**dadurch gekennzeichnet,**
**dass** die Wand (27), an der die Verstärkungselemente (25; 25a) angeordnet sind, eine Außenwand des Grundkörpers (10) ausbilden.

3. Tankbehälter nach einem der Ansprüche 1 oder 2,
**dadurch gekennzeichnet,**
**dass** das Metall des Grundkörpers (10) wasserstoffresistent ist, und dass die Verstärkungselemente (25; 25a) aus einem nicht-wasserstoffresistenten Metall bestehen.

4. Tankbehälter nach einem der Ansprüche 1 bis 3,
**dadurch gekennzeichnet,**
**dass** die Verstärkungselemente (25; 25a) an einer eine Innenwand bildenden Wand (26) des Grundkörpers (12) angeordnet sind.

5. Tankbehälter nach einem der Ansprüche 1 bis 4,
**dadurch gekennzeichnet,**
**dass** die Verstärkungselemente (25; 25a) rippenförmig ausgebildet sind.

6. Tankbehälter nach Anspruch 5,
**dadurch gekennzeichnet,**
**dass** die Breite (b) und/oder Höhe (h) der Verstärkungselemente (25a) unterschiedlich ist oder im Bereich eines Verstärkungselements (25a) variiert.

7. Tankbehälter nach einem der Ansprüche 1 bis 6,
**dadurch gekennzeichnet,**
**dass** die Verstärkungselemente (25; 25a) netz- oder spiralförmig an dem Grundkörper (12) angeordnet sind.

8. Verfahren zur Herstellung eines Tankbehälters (10), der nach einem der Ansprüche 1 bis 7 ausgebildet ist, wobei der Grundkörper (12) und die Verstärkungselemente (25; 25a) durch unterschiedliche Herstellverfahren hergestellt werden, und wobei die Verstärkungselemente (25; 25a) an einer Wand (26, 27) des Grundkörpers (12) nach Herstellung des Grundkörpers (12) unmittelbar in einem generativen Herstellprozess erzeugt werden.

9. Verfahren nach Anspruch 8,
**dadurch gekennzeichnet,**
**dass** die Verstärkungselemente (25; 25a) im DMD (Direct Metall Deposition) - Verfahren erzeugt werden.

10. Verfahren nach einem der Ansprüche 8 oder 9,
**dadurch gekennzeichnet,**
**dass** die Verstärkungselemente (25; 25a) im EBAM (Electron Beam Additive Manufacturing) -Verfahren erzeugt werden.

11. Verfahren nach einem der Ansprüche 8 bis 10,
**dadurch gekennzeichnet,**
**dass** bei einer Ausbildung der Verstärkungselemente (25; 25a) an einer Innenwand des Grundkörpers (12) das Material für die Verstärkungselemente (25; 25a) mittels einer lanzenartigen Einrichtung (30) auf die Innenwand erzeugt wird, die in eine Öffnung (31) des Grundkörpers (12) hineinragt.

## Claims

1. Tank vessel (10) for storing gases, in particular for storing hydrogen in a motor vehicle, comprising a preferably tubular main body (12) and comprising reinforcement elements (25; 25a) located on a wall (26, 27) of the main body (12) and created by a generative production process,
**characterized**
**in that** both the main body (12) and the reinforcement elements (25; 25a) are made of metal, in particular at least substantially of steel, and in that the main body (12) is in the form of a component produced by shaping or in the form of a welded structure, to the wall (26, 27) of which the reinforcement elements (25; 25a) are directly applied.

2. Tank vessel according to Claim 1,
**characterized**
**in that** the wall (27) on which the reinforcement elements (25; 25a) are located forms an outer wall of the main body (10).

3. Tank vessel according to either of Claims 1 and 2,
**characterized**
**in that** the metal of the main body (10) is hydrogen-resistant, and in that the reinforcement elements (25; 25a) consist of a non-hydrogen-resistant metal.

4. Tank vessel according to one of Claims 1 to 3,
**characterized**
**in that** the reinforcement elements (25; 25a) are located on a wall (26) of the main body (12) that forms an inner wall.

5. Tank vessel according to one of Claims 1 to 4,
**characterized**
**in that** the reinforcement elements (25; 25a) are in the form of ribs.

6. Tank vessel according to Claim 5,
**characterized**
**in that** the width (b) and/or height (h) of the reinforcement elements (25a) is different or varies in the region of a reinforcement element (25a).

7. Tank vessel according to one of Claims 1 to 6,
**characterized**
**in that** the reinforcement elements (25; 25a) are arranged on the main body (12) in the form of a lattice or spiral.

8. Method for producing a tank vessel (10) designed according to one of Claims 1 to 7, wherein the main body (12) and the reinforcement elements (25; 25a) are produced by different production methods, and wherein the reinforcement elements (25; 25a) are created directly in a generative production process on a wall (26, 27) of the main body (12) after the main body (12) has been produced.

9. Method according to Claim 8,
**characterized**
**in that** the reinforcement elements (25; 25a) are created by DMD (direct metal deposition).

10. Method according to either of Claims 8 and 9,
**characterized**
**in that** the reinforcement elements (25; 25a) are created by EBAM (electron beam additive manufacturing).

11. Method according to one of Claims 8 to 10,
**characterized**
**in that**, in the case of the reinforcement elements (25; 25a) being formed on an inner wall of the main body (12), the material for the reinforcement elements (25; 25a) is created on the inner wall by means of a lance-like device (30) which projects into an opening (31) of the main body (12).

## Revendications

1. Citerne (10) pour le stockage de gaz, en particulier pour le stockage d'hydrogène dans un véhicule automobile, présentant un corps de base (12), de préférence tubulaire, et des éléments de renforcement (25 ; 25a) agencés sur une paroi (26, 27) du corps de base (12), générés par un procédé de fabrication additive,
**caractérisée**
**en ce que** tant le corps de base (12) que les éléments de renforcement (25 ; 25a) sont réalisés en métal, en particulier au moins essentiellement en acier et en ce que le corps de base (12) est réalisé comme un composant fabriqué dans un procédé de formage ou sous forme de construction soudée, sur la paroi (26, 27) duquel les éléments de renforcement (25 ; 25a) sont appliqués directement.

2. Citerne selon la revendication 1,
**caractérisée**
**en ce que** la paroi (27), sur laquelle les éléments de renforcement (25 ; 25a) sont agencés, forme une paroi externe du corps de base (10).

3. Citerne selon l'une des revendications 1 ou 2,
**caractérisée**
**en ce que** le métal du corps de base (10) résiste à l'hydrogène et en ce que les éléments de renforcement (25 ; 25a) sont constitués par un métal non résistant à l'hydrogène.

4. Citerne selon l'une des revendications 1 à 3,
**caractérisée**
**en ce que** les éléments de renforcement (25 ; 25a) sont agencés sur une paroi (26) formant une paroi interne du corps de base (12).

5. Citerne selon l'une des revendications 1 à 4,
**caractérisée**
**en ce que** les éléments de renforcement (25 ; 25a) sont réalisés sous forme d'arêtes.

6. Citerne selon la revendication 5,
**caractérisée**
**en ce que** la largeur (b) et/ou la hauteur (h) des éléments de renforcement (25a) est/sont différente(s) ou varie(nt) dans la zone d'un élément de renforcement 25a).

7. Citerne selon l'une des revendications 1 à 6,
**caractérisée**
**en ce que** les éléments de renforcement (25 ; 25a) sont agencés sous forme de filet ou de spirale sur le corps de base (12).

8. Procédé de fabrication d'une citerne (10), qui est réalisée selon l'une des revendications 1 à 7, le corps de base (12) et les éléments de renforcement (25 ; 25a) étant fabriqués par des procédés de fabrication différents et les éléments de renforcement (25 ; 25a) étant générés directement dans un procédé de fabrication additive sur une paroi (26, 27) du corps de base (12) après la fabrication du corps de base (12).

9. Procédé selon la revendication 8,
**caractérisé**
**en ce que** les éléments de renforcement (25 ; 25a) sont générés dans un procédé DMD (Direct Metal Deposition - dépôt direct de métal).

10. Procédé selon l'une des revendications 8 ou 9,
**caractérisé**
**en ce que** les éléments de renforcement (25 ; 25a) sont générés dans un procédé EBAM (Electron Beam Additive Manufacturing - fabrication additive par faisceau d'électrons).

11. Procédé selon l'une des revendications 8 à 10,
**caractérisé**
**en ce que** lors d'une réalisation des éléments de renforcement (25 ; 25a) sur une paroi interne du corps de base (12), le matériau pour les éléments de renforcement (25 ; 25a) est généré sur la paroi interne au moyen d'un dispositif (30) de type lance qui pénètre dans une ouverture (31) du corps de base (12).
